# EUROPEAN PATENT APPLICATION

(11) **EP 1 632 853 A1**
(43) Date of publication of application: **08.03.2006**
(21) Application number: 04104305.0
(22) Date of filing: 07.09.2004
(51) Int. Cl.: G06F 9/45

(54) **Method of running an application, apparatus implementing the method and computer program product**

(71) Applicant: Sony Ericsson Mobile Communications AB, 221 88 Lund (SE)
(72) Inventor: Aronsson, Par-Anders, 230 43 Klagshamn (SE)
(74) Representative: Akerman, Marten Lennart

(57) **Abstract**

The invention relates to a method of running an application expanded with information enabling pre-compilation of the application code into machine code. The application (4) is in an intermediate code and stored in an apparatus (1) comprising an environment unit (2) capable of transposing such an application into machine readable code and running the application. The application is provided or associated with profiling information identifying portions of the intermediate code which are to be compiled into machine readable code. The method comprises the step of compiling portions of the application in dependence of the profiling information. The invention also relates to an apparatus (1) implementing the method and the corresponding computer program product, i.e. an application (4) thus expanded.

## Description

### Field of the invention

The present invention relates to a method of running an application, particularly a Java application in bytecode expanded with information enabling pre-compilation of the application code into machine code. The invention also relates to an apparatus implementing the method and the corresponding computer program product, i.e. an application thus expanded.

### State of the art

In electronic equipment, such as mobile telephones, it is often desired to enhance the functionality by adding applications, for instance games. A known example is a MIDLet, which is the term of an application in the Java environment. Java applications are delivered using a platform neutral coding (bytecode), later called Java code. There is a platform or environment, in the Java environment called the Virtual Machine (VM) that executes the Java code. The Virtual Machine can be implemented in many different ways with varying performance, run time behaviour, memory requirements, hardware costs, etc. Some of the possibilities are described below.

The Java bytecode is a compact and machine independent way of defining the application. However, running the application in bytecode directly is either slow or requires expensive hardware. On the other hand, the bytecode may be compiled into machine dependent code. A machine code is fast to execute but requires large memory space. This problem has been resolved in the prior art as set forth below.
- The Virtual Machine may comprise an interpreter. An interpreter is a unit that reads the Java bytecode one instruction at a time and executes the instructions. The solution is simple but results in the slowest type of Java execution.
- The bytecode may be pre-compiled before execution. That is, the Java code is translated into platform specific code, sometimes referred to as native code. The translation can be performed at different times in the life cycle of the Java application, e.g. at installation, start-up and Java class loading. The execution of the application will be fast but requires large memory space, since native code is many times larger than Java code.
- The virtual machine may comprise a JIT (Just In Time) compiler. The JIT compiler starts execution of the Java application in interpreter mode. It then profiles execution of the application to know which parts of the application are most frequently executed. Those parts are then translated into native code. The rest of the code is still interpreted at each execution. The execution speed is reasonably fast and the total code size is reasonable, since only small parts are compiled into native code. However, there are also large memory requirements to support the JIT compiler itself. Also, the performance of the execution may vary from time to time.
- Another possibility is to enhance the platform processor (CPU) such that it is capable of executing some bytecode directly. This requires a more expensive processor but even so, it is not possible to achieve full hardware speed-up.
- A Java co-processor may be added in the virtual machine. That is, the virtual machine is not virtual but implemented in hardware. The co-processor operates in parallel with the ordinary processor and executes the bytecode directly. The performance is very high, but also the hardware costs will be significantly increased.

Thus, there is a desire to get to a higher performance level without adding the hardware costs. The JIT compilation technology is available, but this technology has some drawbacks which make it not suitable for Java gaming on a resource constrained device. The introduction of 3D graphics will require a lot of calculations to be performed in Java. The large demand on RAM memories is never good and varying performance is very bad from and end-user perspective when playing Java games.

### Summary of the invention

The present invention uses a balanced solution between the memory requirements and the execution speed by compiling part of the application and running the rest through an interpreter, similar to the JIT compiler mode. The present invention improves the JIT approach by adding profiling information to or in connection with the application, defining parts to be compiled and compiling part of the application off line. The actual compilation from bytecode to machine code may be performed in advance or when running the application.

In a first aspect, the invention provides a method of running an application being in an intermediate code and stored in an apparatus comprising an environment unit capable of transposing such an application into machine readable code and running the application.

According to the invention, said application is provided or associated with profiling information identifying portions of the intermediate code which are to be compiled into machine readable code, the method comprising the step of compiling portions of the application in dependence of the profiling information.

Preferably, the profiling information is extracted from the application.

In one embodiment, the profiling information is generated from the application by the environment unit for association with the application.

The profiling information may be added into the application, or the profiling information may be saved in the environment unit.

In one embodiment, relevant portions of the intermediate code are compiled into machine readable code at installation of the application.

In another embodiment, relevant portions of the intermediate code are compiled into machine readable code at start up of the application.

In a further embodiment, relevant portions of the intermediate code are compiled into machine readable code during the first run of the application.

The compilation may be performed during class loading.

The first run of the application may be a demo run.

Preferably, the compiled machine readable code is at least temporarily stored in a memory.

In one embodiment, all or portions of the compiled machine readable code stored in the memory are discarded, if the available memory space gets restricted.

The compiled machine readable code stored in the memory may be discarded in dependence of different priorities included in the profiling information.

The environment unit may select not to store compiled portions of the intermediate code in dependence of available memory space.

Preferably, portions of the intermediate code are not stored in dependence of different priorities included in the profiling information.

In a second aspect, the invention provides an apparatus comprising an environment unit capable of transposing an application, stored in the apparatus and being in an intermediate code, into machine readable code and running the application.

According to the invention, said application is provided or associated with profiling information identifying portions of the intermediate code which are to be compiled into machine readable code, and the apparatus is adapted to compile portions of the application in dependence of the profiling information.

Preferably, the environment unit is adapted to extract the profiling information from the application.

In one embodiment, the environment unit is adapted to generate the profiling information from the application for association with the application.

The environment unit may be adapted to add the profiling information into the application, or the environment unit may be adapted to save the profiling information.

In one embodiment, the environment unit is adapted to compile relevant portions of the intermediate code into machine readable code at installation of the application.

In another embodiment, the environment unit is adapted to compile relevant portions of the intermediate code into machine readable code at start up of the application.

In a further embodiment, the environment unit is adapted to compile relevant portions of the intermediate code into machine readable code during the first run of the application.

The environment unit may be adapted to perform the compilation during class loading.

Preferably, the environment unit is adapted to store the compiled machine readable code at least temporarily in a memory.

In one embodiment, the environment unit is adapted to discard all or portions of the compiled machine readable code stored in the memory, in dependence of the available memory space.

The environment unit may be adapted to discard portions of the compiled machine readable code stored in the memory in dependence of different priorities included in the profiling information.

The environment unit may be adapted to select not to store compiled portions of the intermediate code in dependence of available memory space.

Preferably, the environment unit is adapted to select not to store compiled portions of the intermediate code in dependence of different priorities included in the profiling information.

In one embodiment, the environment unit comprises a JIT compiler for Java bytecode.

The apparatus may be a portable telephone, a pager, a communicator, a smart phone or an electronic organiser.

In a third aspect, the invention provides a computer program product comprising software portions including an application being in an intermediate code and loadable into an apparatus, said apparatus comprising an environment unit capable of transposing such an application into machine readable code and running the application.

According to the invention, said application is provided or associated with profiling information identifying portions of the intermediate code which are to be compiled into machine readable code.

The profiling information may be included as profile attributes in a class file.

Suitably, the profiling information defines which lines of the intermediate code are static, that is pre-compiled with static profiling information, and which lines of the intermediate code are dynamic, that is pre-compiled with dynamic profiling information which may be modified.

The dynamic lines may be assigned different priorities.

Suitably, the different priorities are arranged so that only dynamic lines with higher priorities should be compiled into machine readable code, in dependence of available persistent memory space in the apparatus.

The profiling information may define that a line of the intermediate code is to be compiled at start up of the application.

The product may be adapted to command the environment unit to perform the first run of the application as a demo run.

Suitably, the product comprises control information for governing pre-compilation operation modes to be adopted by the apparatus.

The control information may be defined for a set of lines in a class, for a whole class, or for the whole product.

### Brief description of the drawings

The invention will be described in detail below with reference to the drawings, of which the sole figure is a schematic drawing of an apparatus with relevant entities implementing the invention.

### Detailed description of preferred embodiments

As mentioned in the introduction, the main object of the invention is to achieve a balance between execution speed and memory requirements while using the existing JIT compilation infrastructure. Profiling information is created by identifying portions of the bytecode suitable for compiling, e.g. portions that are executed frequently or require high execution speed.

The profiling information may be created by the developer of the application during the development phase. The Java language is currently being updated to support annotations in the source code. Thus, the developer may insert the profiling information directly in the source code as annotations, which are compiled by the Java compiler to bytecode for later delivery. The developer may also select to insert the profiling information as profile attributes with identifiers in class files forming part of the bytecode.

In an alternative embodiment the profiling information is created during running of the application.

The profiling information is proprietary information that does not change the semantics but can be used before or during execution of the application. If such an expanded application is delivered to a device that does not support the invention, the extra information may be ignored and does not effect the execution of the application. The added profiling information does not increase the size of the application significantly, especially not in comparison with the machine code generated when compiling the application in the apparatus.

The profiling information includes information about which lines of the Java (intermediate) code should be pre-compiled or interpreted at every execution. Some lines can be defined as static, i.e. they are fixed lines of Java code to be pre-compiled prior to execution, if possible, always. The profiling information of the static lines is not variable. This is suitable if the lines are executed frequently or do require high speed. Other lines may be defined as dynamic. They are also pre-compiled before execution, but as a starting point before the first execution. The profiling information of the dynamic lines may be modified/optimized during run time. The altered profiling information may be saved and used during the next execution.

Different priorities may be assigned to both the static and dynamic lines. If the available memory space is scarce, the lines with a low priority may be ignored and not compiled. Also, if already compiled, the compiled code with least priority may be removed.

Some lines can be defined as start-up, i.e. to be compiled and optimized at run time, particularly during the first run of the application. This feature results in that the compiled code only exists in the working storage during running of the application.

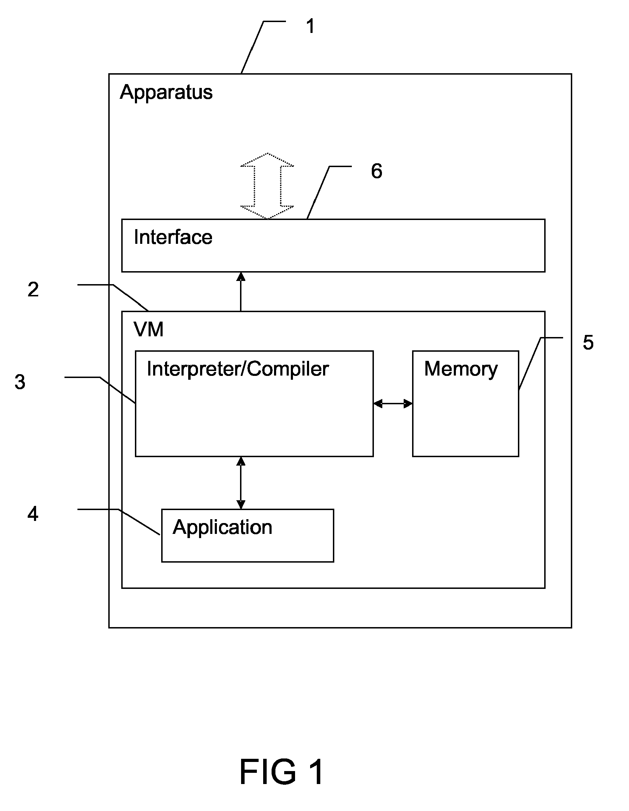

An apparatus adapted to receive such an expanded application according to the invention is shown in fig. 1. The invention is described with reference to a portable telephone, but may also e.g. be a pager, a communicator, a smart phone or an electronic organiser. Also, even though the invention is described with reference to the Java environment, other platforms are equally applicable, e.g Microsoft.Net, as will be appreciated by a person skilled in the art.

As is known an apparatus 1, such as a mobile phone, may be provided with an environment unit 2, for instance a Virtual Machine, having an interpreter/compiler 3 for running an application 4 received from a developer in an intermediate code, such as the Java bytecode. The Virtual Machine 2 is provided with the required non-persistent working storage as well as a persistent memory 5 for storing the application and interpreter/compiler software. The Virtual Machine 2 usually co-operates with an application programmable interface 6 for accessing other parts of the apparatus as shown with a broad arrow. The verification and validation of the application 4 does not form part of the present invention.

The interpreter/compiler 3 is basically a JIT compiler modified to utilize the profiling information. The apparatus may be run in various modes, as explained below.

In a first mode, the apparatus 1 receives an expanded application 4. Relevant portions of the bytecode (whether static or dynamic) are pre-compiled and stored in the persistent memory 5 for later reuse. The pre-compilation may be performed when installing the application or prior to the first start-up. This mode requires memory space in the persistent memory 5 for the compiled machine code as long as the application is installed. On the other hand, the application is optimized to be executed already during the first run with a minimum of delays.

In a second mode, the apparatus 1 receives an expanded application 4. In contrast to the first mode, the extraction of profiling information and compiling of relevant portions of the bytecode (whether static or dynamic) is not performed until the application is started. At start-up the compilation is performed before each run of the application. The pre-compiled code is only stored in the working storage. This compilation may be invisible to the user. The second mode does not require memory space in the persistent memory 5 but only in the working storage as long as the application is running. Delays are experienced at each run with a longer start-up time than the ordinary JIT compiler, but without any delays during the whole execution which is at full speed.

In a third mode, the apparatus 1 is also receiving an expanded application 4. In this mode the profile information is extracted and relevant portions of the bytecode (whether static or dynamic) is compiled during the first run of the application. This may be performed during the usual class loading, when each class is loaded. This is more similar to the conventional JIT compilation, but no analysis or profiling of the application has to be made as all the necessary information is already included in the profiling information. The compiled machine code is stored in the persistent memory 5. Delays are experienced during the first run of the application. The delays are accumulated during execution. The delay at startup is smaller since the delays are spread over the different class loadings. The application will most likely start to execute before all of the application is compiled.

In a fourth mode, the apparatus 1 is also receiving an expanded application 4. In this mode the profile information is extracted and relevant portions of the bytecode (whether static or dynamic) is compiled during each run of the application. This is performed during the usual class loading, like the third mode. The compiled machine code is not stored in the persistent memory 5, and delays are experienced during each run of the application just as in the first run of the third mode.

Which of the four pre-compilation operation modes is to be adopted may be governed by the application by inserting control information. This may be in various places, and can be defined for a set of lines in a class, for a whole class, or for a whole application. Defining the mode for a whole application requires a new mechanism for Java since all annotations to the code are added per class. It would be possible to add such information in the Manifest of a JAR file. This equals a shortcut for setting the mode of all included classes.

If no mode is specified in the application, the virtual machine 2 can decide the mode. Also, depending on other circumstances, the virtual machine 2 can override the mode information. The metainformation contained in the application is always a hint to the implementation of the apparatus 1. The implementation can have a policy that overrides all or parts of the metainformation.

The application may be adapted to perform the first run as a demo run assuming that the implementation of the virtual machine 2 is known. In the demo run the user is only watching and not taking any active part while relevant portions are compiled. Thus, profiling information may be created, extracted or altered without disturbing the user. Saving profiling information will help the next execution.

In a further embodiment, the profiling information is not created by the provider of the application but during the first run of the application, similar to the JIT compiler approach. This is necessary if no profiling information is available when the application is delivered. Then the application is executed in JIT mode to perform profiling during the first execution. However, in contrast to the conventional JIT approach, profile information is saved for use next time the application is run. Here too, the first run may be a demo run. The profile information may be saved and inserted into the bytecode. Then, the application is expanded and may be used in one of the four modes 1 to 4, as discussed above. In an alternative, the created profile information is stored in the persistent memory 5 of the Virtual Machine 2. Instead of extracting the profile information from the application when needed, it is retrieved from the memory 5. In this case, too, the application may be run in one of the four modes as discussed above.

In the first and third modes discussed above, memory space in the persistent memory 5 is required. If the memory space available to the Virtual Machine 2 is varying or restricted for various reasons or scarce to begin with, logic in the Virtual Machine may select not to store pre-compiled bytecode or portions thereof in the persistent memory 5. The Virtual Machine may also select to discard already compiled machine code for the same reason, at the sacrifice of execution speed. The memory space available in the persistent memory 5 may for instance be restricted when needed for downloading a new application. What portions to be selected may be controlled by inserting priority information as mentioned above. Bytecode with less priority is selected not to be stored or discarded first.

It will be appreciated that the present invention has several advantages over the prior art. The profiling part, normally done in a JIT implementation in application run time, is instead performed during the development phase. Alternatively, it is performed in run time but the created information is saved. The profiling information is preferably added to the application Java code that is downloaded to the terminal. This makes it possible to use the JIT infrastructure, but to perform the compilation to native code at a time when it does not negatively affect the run time performance. The resulting solution has high and stable performance, which makes it very useful for gaming in contrary to the JIT solution. The code size will be reasonable small, i.e. about the same as for the JIT solution, but it will probably be possible to reduce the RAM requirements relative to the original JIT solution.

The invention may be implemented by various combinations of hardware and software, as will be appreciated by a person skilled in the art. The scope of the invention is only limited by the claims below.

## Claims

1. A method of running an application (4) being in an intermediate code and stored in an apparatus (1) comprising an environment unit (2) capable of transposing such an application (4) into machine readable code and running the application (4), wherein said application (4) is provided or associated with profiling information identifying portions of the intermediate code which are to be compiled into machine readable code, comprising the step of compiling portions of the application (4) in dependence of the profiling information.

2. A method according to claim 1, wherein the profiling information is extracted from the application (4).

3. A method according to claim 1, wherein the profiling information is generated from the application (4) by the environment unit (2) for association with the application (4).

4. A method according to claim 3, wherein the profiling information is added into the application (4).

5. A method according to claim 3, wherein the profiling information is saved in the environment unit (2).

6. A method according to any one of claims 1 to 5, wherein relevant portions of the intermediate code are compiled into machine readable code at installation of the application (4).

7. A method according to any one of claims 1 to 5, wherein relevant portions of the intermediate code are compiled into machine readable code at start up of the application (4).

8. A method according to any one of claims 1 to 5, wherein relevant portions of the intermediate code are compiled into machine readable code during the first run of the application (4).

9. A method according to claim 8, wherein the wherein the compilation is performed during class loading.

10. A method according to claim 8 or 9, wherein the first run of the application (4) is a demo run.

11. A method according to any one of claims 1 to 10, wherein the compiled machine readable code is at least temporarily stored in a memory (5).

12. A method according to claim 11, wherein all or portions of the compiled machine readable code stored in the memory (5) are discarded, if the available memory space gets restricted.

13. A method according to claim 12, wherein portions of the compiled machine readable code stored in the memory (5) are discarded in dependence of different priorities included in the profiling information.

14. A method according to any one of claims 11 to 13, wherein the environment unit (2) selects not to store compiled portions of the intermediate code in dependence of available memory space.

15. A method according to claim 14, wherein portions of the intermediate code are not stored in dependence of different priorities included in the profiling information.

16. An apparatus (1) comprising an environment unit (2) capable of transposing an application (4), stored in the apparatus (1) and being in an intermediate code, into machine readable code and running the application (4), wherein said application (4) is provided or associated with profiling information identifying portions of the intermediate code which are to be compiled into machine readable code, wherein the apparatus (1) is adapted to compile portions of the application (4) in dependence of the profiling information.

17. An apparatus according to claim 16, wherein the environment unit (2) is adapted to extract the profiling information from the application (4).

18. An apparatus according to claim 16, wherein the environment unit (2) is adapted to generate the profiling information from the application (4) for association with the application (4).

19. An apparatus according to claim 18, wherein the environment unit (2) is adapted to add the profiling information into the application (4).

20. An apparatus according to claim 18, wherein the environment unit (2) is adapted to save the profiling information.

21. An apparatus according to any one of claims 16 to 20, wherein the environment unit (2) is adapted to compile relevant portions of the intermediate code into machine readable code at installation of the application (4).

22. An apparatus according to any one of claims 16 to 20, wherein the environment unit (2) is adapted to compile relevant portions of the intermediate code into machine readable code at start up of the application (4).

23. An apparatus according to any one of claims 16 to 20, wherein the environment unit (2) is adapted to compile relevant portions of the intermediate code into machine readable code during the first run of the application (4).

24. An apparatus according to claim 23, wherein the environment unit (2) is adapted to perform the compilation during class loading.

25. An apparatus according to any one of claims 16 to 24, wherein the environment unit (2) is adapted to store the compiled machine readable code at least temporarily in a memory (5).

26. An apparatus according to claim 25, wherein the environment unit (2) is adapted to discard all or portions of the compiled machine readable code stored in the memory (5), in dependence of the available memory space.

27. An apparatus according to claim 26, wherein the environment unit (2) is adapted to discard portions of the compiled machine readable code stored in the memory (5) in dependence of different priorities included in the profiling information.

28. An apparatus according to any one of claims 25 to 27, wherein the environment unit (2) is adapted to select not to store compiled portions of the intermediate code in dependence of available memory space.

29. An apparatus according to claim 28, wherein the environment unit (2) is adapted to select not to store compiled portions of the intermediate code in dependence of different priorities included in the profiling information.

30. An apparatus according to any one of claims 16 to 29, wherein the environment unit (2) comprises a JIT compiler (3) for Java bytecode.

31. An apparatus according to any one of claims 16 to 30, wherein the apparatus (1) is a portable telephone, a pager, a communicator, a smart phone or an electronic organiser.

32. A computer program product comprising software portions including an application (4) being in an intermediate code and loadable into an apparatus (1), said apparatus (1) comprising an environment unit (2) capable of transposing such an application (4) into machine readable code and running the application (4), **characterised in that** said application (4) is provided with or to be associated with profiling information identifying portions of the intermediate code which are to be compiled into machine readable code.

33. A computer program product according to claim 32, wherein the profiling information is included as profile attributes in a class file.

34. A computer program product according to claim 32 or 33, wherein the profiling information defines which lines of the intermediate code are static, that is pre-compiled with static profiling information, and which lines of the intermediate code are dynamic, that is pre-compiled with dynamic profiling information which may be modified.

35. A computer program product according to any one of claims 32 to 34, wherein the intermediate code lines are assigned different priorities.

36. A computer program product according to claim 35, wherein the different priorities are arranged so that only lines with higher priorities should be compiled into machine readable code, in dependence of available persistent memory space in the apparatus.

37. A computer program product according to any one of claims 32 to 36, wherein the profiling information defines that a line of the intermediate code is to be compiled at start up of the application (4).

38. A computer program product according to any one of claims 32 to 37, wherein the product is adapted to command the environment unit (2) to perform the first run of the application (4) as a demo run.

39. A computer program product according to any one of claims 32 to 38, wherein the product comprises control information for governing pre-compilation operation modes to be adopted by the apparatus.

40. A computer program product according to claim 39, wherein the control information is defined for a set of lines in a class, for a whole class, or for the whole product.
